# EUROPÄISCHE PATENTSCHRIFT

(11) **EP 0 656 322 B1**
(45) Veröffentlichungstag und Bekanntmachung des Hinweises auf die Patenterteilung: **05.08.1998**
(21) Anmeldenummer: 93250335.2
(22) Anmeldetag: 04.12.1993
(51) Int. Cl.: C02F 1/78, B01D 53/34

(54) **Reinigungsanlage**
Purification system
Système de purification

(43) Veröffentlichungstag der Anmeldung: 07.06.1995
(73) Patentinhaber: KRÜGER, Gerhard, D-25767 Bunsoh (DE)
(72) Erfinder: KRÜGER, Gerhard, D-25767 Bunsoh (DE)
(74) Vertreter: Scholz, Hartmut, Dipl.-Ing. Patentanwalt

(56) Entgegenhaltungen:
- WO-A-89/08615
- DE-A- 4 224 259
- DE-B- 1 062 394
- FR-A- 2 432 483
- US-A- 5 075 016
- US-A- 5 114 576

## Beschreibung

Die Erfindung betrifft eine Vorrichtung und ein Verfahren zur gemeinsamen Beseitigung von Verunreinigungen aus sowohl flüssigen als auch gasförmigen Fluiden durch Behandlung mit Ozon in einem Reaktor.

Aus der US-A-5 114 576 ist es bekannt, Verunreinigungen in Grund- und Oberflächenwässern mittels Ozon zu beseitigen. Hierbei werden biologische Verunreinigungen oder Ansammlungen von gelösten Partikeln mit Hilfe einer Venturidüse angesaugt und in einem Reaktor beseitigt.

Ein in der DE-A-1 960 953 beschriebenes Verfahren zum Kondensieren und Gefrieren von Wasserdampf aus einem Gasgemisch findet in Anordnungen Verwendung, die zum Ausfällen eines bestimmten Bestandteiles, z. B. Schwefeldioxid, aus einem Gasgemisch dienen, in denen das kalte Restgas zum Wärmeaustausch mit zugeführtem heißen und nicht aufbereitetem Gas verwendet wird und das Gasgemisch vor Eintreten in den Kondensator relativ frei von Wasser sein soll. Aus der DE-A-2 025 523 ist bekannt, titrimetrische Messungen zum Überwachen und Regeln von chemischen Behandlungsbädern durchzuführen.

Aus der Zeitschrift "Wasser, Luft und Betrieb", 19 (1975) Nr. 4, S. 147-152 ist es bekannt, zur Wasser- und Luftbehandlung Ozon zu verwenden. Aus der DE-AS 10 62 394 ist ein Verfahren und eine Vorrichtung zum Geruchfreimachen von Luft, insbesondere industriellen Abgasen mittels Ozon bekannt, die in Kern aus einem Einleitungsrohr mit einer Venturidüse besteht. Die verunreinigte Luft wird über das Einleitungsrohr mit Ozon in einer Mischeinrichtung vermengt, wobei das Ozon durch einen an der Venturidüse des Einleitungsrohres entstehenden Unterdruck aus einem Ozonisator angesaugt wird.

Aus der US-A-4 430 306 ist eine Vorrichtung zum Rückgewinnen von Sauerstoff nach Ozonierungsreaktionen bekannt. Zu diesem Zweck wird bei einer Ozonierungsreaktion nicht verbrauchtes O₂ einem Trockenturm zugeleitet, in dem Unreinheiten wie Wasser, organische Verunreinigungen und CO₂ an Zeolithen adsorbiert werden. Der gereinigte Sauerstoff wird dem Ozonisator zur Erhöhung der Ozonausbeute wieder zugeführt.

Aus der GB-A-1 427 614 C1 ist ein Verfahren und eine Vorrichtung bekannt, mit dessen Hilfe verunreinigte, insbesondere faulige Luft durch Einwirkung von Ozon gereinigt werden kann. Dazu wird ozongesättigte, feuchte Luft und feinste ozongesättigte Wassertröpfchen in die verunreinigten Gase eingeblasen, wobei der Ozongehalt jederzeit gemessen und reguliert werden kann.

Aus der US-C-5 114 576 ist eine Vorrichtung zur Dekontaminierung und Vermeidung von Ansammlung von verteilten Verunreinigungen in Wassersystemen mit Hilfe von chemischen Mitteln, insbesondere Ozon, bekannt.

Aus der WO-A-89/08615 ist eine Vorrichtung zur Reinigung von Wasser aus Schwimmbecken mit Hilfe eines Ozonreaktors und einer Venturidüse bekannt.

Aus der F-A-2 432 483 ist eine Vorrichtung zur Reinigung von Wasser mittels Ozon bekannt.

Ein weitverbreitetes Problem ergibt sich bei der industriellen Fertigung von Innenbeschichtungen für Deckel, beispielsweise von Flaschen und Dosen, bei der toxische und/oder explosive Gase entstehen können, die aus dem jeweiligen Herstellungsverfahren resultieren. So können beispielsweise bei sog. *Twist*-*off*-Deckeln, die eine einen Weichmacher enthaltene Gummierung aufweisen, toxische Gase freigesetzt werden, wenn diese Deckel auf ca. 180°C erhitzt werden, damit die Deckel dicht auf die Dosen oder Flaschen aufgebracht werden können. Könnten diese Gase durch eine Absaugeinrichtung einer Entsorgungseinrichtung zugeführt werden, so wäre ein unproblematischer Umgang bei diesen und ähnlichen Herstellungsverfahren gewährleistet.

Aufgabe der Erfindung ist es, eine Vorrichtung und ein Verfahren zu schaffen, bei der mittels Ozon Verunreinigungen aus gasförmigen und gleichzeitig flüssigen Fluiden entfernt werden können.

Diese Aufgabe wird dadurch gelöst, daß die gasförmig und flüssig vorliegenden Fluide und das Ozon durch die dem Reaktor zugeordnete Unterdruckversorgung sowohl gemeinsam als auch getrennt voneinander zuförderbar sind, sowie daß der Wärmetauscher eine Kühlvorrichtung aufweist, die aus einem Kondensator besteht und dem Kondensator eine Kühlmaschine zugeordnet ist, das gasförmige Fluid in dem Wärmetauscher in verschiedene Aggregatzustände überführbar ist und für jeden Aggregatzustand eine getrennte Zuleitung zu dem Reaktor vorgesehen ist.

Bei einer besonders für die Reinigung von gasförmigen Fluiden geeigneten Vorrichtung ist es vorgesehen, daß die gasförmigen Fluide aus einer Ansaugkammer und das Ozon aus einem Ozonisator über separate Zuleitungen gelangend in eine gemeinsame Leitung mündend in den Reaktor überführbar sind, dem eine die Luftfeuchtigkeit und den Sauerstoffgehalt des gereinigten Fluids erhöhende Verrieselungsanlage nachgeordnet ist.

Über eine Absaugeinrichtung können toxische Gase erfindungsgemäß als Gasgemisch mit Luft derart angesaugt und in einen Wärmetauscher überführt werden, daß sie in dem Wärmetauscher in verschiedene Aggregatzustände überführbar sind und für jeden Aggregatzustand über getrennte Zuleitungen zu dem Reaktor geführt werden. Durch diese Maßnahme können sowohl gasförmige als auch flüssige Fluide getrennt einer Ozonbehandlung zugeführt werden, welche durch Messung geeigneter Zustandsgrößen wie Redoxpotential, pH-Wert, Temperatur, Ozongehalt, Reaktionsdauer und anderer kennzeichnender Parameter gesteuert wird. In Abhängigkeit des Verunreinigungsgrades wird nach einem festzulegenden Sollwert die Verweildauer der verunreinigten Lösung in dem Reaktor, in dem die Ozonbehandlung stattfindet, und der Ozongehalt eingestellt. Es ist vorgesehen, neben der analogen auch eine digitale Steuerung der Ozonabgabe und der Verweildauer der Fluide in dem Reaktor, einzurichten, wobei letztlich die gesamte Anlage zukünftig auf digitalen Betrieb umgestellt werden soll. Ein weiterer Vorteil der Erfindung liegt darin, daß es durch die geregelte Ozonabgabe nicht zu Belastungen der Umgebung mit Ozon kommt.

Neben der Absaugeinrichtung von Gasgemischen bietet die Erfindung aber gleichzeitig noch die Möglichkeit, verunreinigte Flüssigkeiten aus einem Vorratsbehälter anzusaugen und diese ebenfalls einer Ozonbehandlung zuzuführen, wobei der Reaktor, in dem die Ozonbehandlung stattfindet gleichsam das kondensierte Gasgemisch und die verunreinigte Flüssigkeit aufnimmt, wobei diese gleichzeitig als Medium für das Ozon dient, d. h. das Ozon wird, zumindest teilweise, in der Flüssigkeit gelöst.

Ein weiteres erfindungsgemäßes Merkmal besteht darin, daß die gereinigten Fluide zur Beseitigung von Verunreinigungen, welche nicht mit Ozon beseitigt werden können, einer Filteranlage zugeführt werden und/oder einer Anordnung zuführbar sind, in welcher mit Hilfe von nitrifizierenden Bakterien organische Wasserinhaltsstoffe in Nitrate umgewandelt werden.

Dieses kann in einer Filteranlage geschehen, in welcher z. B. über Aktivkohle restliches Ozon gebunden wird oder aber auch Schwermetalle absorbiert werden können. Denkbar ist auch der Einsatz der Filteranlage, um feste Bestandteile aus dem Fluid auszufiltern. Im Fall, daß die Flüssigkeit durch einen hohen Verunreinigungsgrad gekennzeichnet ist, steht die Möglichkeit offen, diese einer nitrifizierenden Anordnung zuzuführen. In dieser aus mehreren in Reihe geschalteter, kaskadenförmig angeordneter Behältern bestehenden Anordnung werden handelsübliche Bakterien gehalten, die in der Lage sind, organische Wasserinhaltsstoffe, z.B. Futterreste, Kot, Harn, Pflanzenreste etc. aufzunehmen und in Nitratverbindungen umzusetzen, die von Wasserpflanzen aufgenommen werden können.

Zur Aufrechterhaltung des biologischen Gleichgewichts innerhalb der nitrifizierenden Anordnung werden in derselben Pflanzen gehalten, die das entstehende Nitrat aufnehmen, gleichzeitig wird das Medium der Bakterien mittels Bestimmung der Populationsdichte durch Messung der optischen Dichte, des pH-Werts und der Temperatur kontrolliert.

Die Erfindung hat sich als ausgesprochen wirkungsvoll und sehr vielseitig anwendbar herausgestellt. So konnten durch die Ozonbehandlung Öle, Speiseöle, Motorenöle, sowie PVC (Polyvinylchlorid)-Späne aber auch stark basische und saure Lösungen durch die Ozonbehandlung in eine biologisch verträgliche Form gebracht werden, so daß nach einer anschließenden Verweildauer in der nitrifizierenden Anordnung keinerlei nachteilige Wirkung auf das Ökosystem der nitrifizierenden Anordnung festgestellt werden konnte. Insbesondere der oben in der Problemstellung erwähnte Weichmacher wurde auf Zersetzung durch Ozonbehandlung untersucht, wobei sich herausstellte, daß der Weichmacher zu einer nicht-toxischen Verbindung umgewandelt wird, die innerhalb des Reaktors ausfällt und über die Filteranlage abgefiltert werden kann. Die feste Verbindung kann nachfolgend kompostiert werden.

Eine weitere Aufgabe der Erfindung ist es, ein Verfahren zu schaffen, mit dem Verunreinigungen aus Flüssigkeiten und/oder Gasen entfernt werden können.

Gelöst wird diese Aufgabe dadurch, daß die verunreinigten Fluide gasförmig oder flüssig vorliegen und über getrennte Leitungen mittels Unterdruck in einen dem jeweiligen Reservoir nachgeordneten, mit Ozon beschickbaren Reaktor geleitet werden, in dem sie gemeinsam mit Ozon behandelt werden, und das Ozon durch ein in dem Reaktor über dem verunreinigten Fluid entstehendes Vakuum gleichzeitig angesaugt werden.

Dabei ist es vorteilhaft, daß der für den Transport der Fluide und des Ozons erforderliche Unterdruck an einer in dem Reservoir angeordneten Venturidüse erzeugt wird, sowie, daß das Reservoir zugleich als Auffangbecken für das mit Ozon gereinigte Fluid verwendet wird, wobei zum einen eine Vorreinigung des verunreinigten Fluids mit dem mit Ozon angereicherten, aus dem Reaktor kommenden Fluids erfolgt und zum anderen sich überschüssiges Ozon aus dem mit Ozon angereicherten, aus dem Reaktor kommenden Fluids verflüchtigt.

Ferner kann es vorgesehen sein, daß die zur Ozonbehandlung erforderliche Ozonmenge in Abhängigkeit eines festzulegenden, aus reaktionsspezifischen Parametern resultierenden Sollwertes, über eine steuerbare Meß- und Regeleinrichtung gesteuert wird.

Zur Behandlung gasförmiger Fluide ist es vorgesehen, daß die gasförmigen Fluide aus der Ansaugkammer und das Ozon aus dem Ozonisator mittels Unterdruck aus separaten Zuleitungen zuerst in eine gemeinsame Leitung und nachfolgend in den Reaktor gesogen werden und das gereinigte Fluid zur Luftbefeuchtung und zur Anreicherung mit Sauerstoff eine nachgeordnete, kaskadenförmige Behälterreihe durchläuft.

Verunreinigungen aus im Reservoir bevorrateten Fluiden durch Behandlung mit Ozon beseitigt werden, indem sie in einem dem Reservoir nachgeordneten, mit Ozon beschickbaren Reaktor geleitet werden, in dem die zu reinigenden Fluide mit Ozon behandelt werden, wobei die zur Ozonbehandlung erforderliche Ozonmenge in Abhängigkeit eines vorher festzulegenden Sollwertes, der aus reaktionsspezifischen Parametern resultiert, über eine steuerbare Meß- und Regeleinrichtung gesteuert wird. Weiterhin gehört zur Lösung dieser Aufgabe, daß die gereinigten Fluide zur Beseitigung von Verunreinigungen, welche nicht mit Ozon beseitigt werden können, einer Filteranlage zugeführt werden und/oder einer Anordnung zuführbar sind, in welcher mit Hilfe von nitrifizierenden Bakterien organische Wasserinhaltsstoffe in Nitrate umgewandelt werden.

Die Ausführungsbeispiele der Erfindung sind in der Zeichnung dargestellt und werden nachfolgend näher beschreiben:

Es zeigt:
- **Figur 1**: die schematischen Darstellung einer Anlage zur Beseitigung von Verunreinigungen aus in mindestens einem Reservoir bevorrateten Fluiden durch Behandlung mit Ozon;
- **Figur 2**: den schematischen Seitenquerschnitt des Wärmetauschers, der eine Baueinheit der oben genannten Anlage bildet;
- **Figur 3**: den schematischen Aufbau der nitrifizierenden Anordnung, die der oben genannten Anlage nachgeordnet sein kann, im Querschnitt;
- **Figur 4**: eine Luftreinigungsanlage zur Beseitigung von Verunreinigungen aus gasförmigen Fluiden, mit einer Ansaugkammer und einem Ozonisator, die über eine gemeinsame Ansaugleitung mit einem Reaktor verbunden sind, und der eine Verrieselungsanlage nachgeschaltet ist.

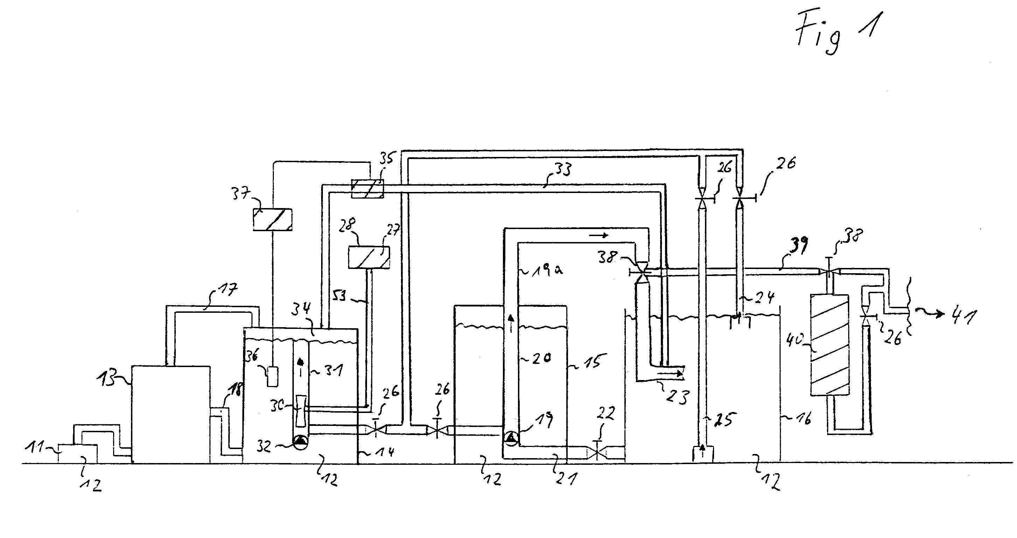

In Figur 1 strömen aus einer Absaugkammer 11 gasförmige Fluide 12, die aus einer beliebigen Verbrennungsreaktion resultieren können, in den Wärmetauscher 13. Das Gasgemisch 12 läßt sich entweder als Druckluft in den Wärmetauscher 13 einführen oder durch Unterdruck ansaugen. In dem Wärmetauscher 13 kondensiert das Gasgemisch 12 und wird über zwei getrennte Abläufe, eine Kondensatleitung 18 und eine Restgasleitung 17, die das nichtkondensierte Restgasgemisch abführt, in den Reaktor 14 geführt.

Der für den Transport der Fluide 12 notwendige Unterdruck resultiert aus der an der Steigleitung 20 in dem Reservoir 16 angeordneten Venturidüse 23. Durch eine Pumpe 19 mit regelbarer Pumpenleistung in der Steigleitung 20 wird aus dem Reservoir 16 Fluid 12 - in diesem Fall Flüssigkeit - durch die Hauptleitung 21 über die Steigleitung 20 in das Reservoir 16 umgepumpt, wobei aber auch über die Absaugleitungen 24 und 25 Flüssigkeit von der Oberfläche oder vom Boden des Reservoirs 16 abgesaugt werden kann, oder aber auch der Inhalt des Reaktors 14 wieder dem Reservoir 16 zugeführt werden kann. Durch die Ventile 22 und 26 können die Rohrleitungen 21, 24, 25 und 39 entsprechend der Aufgabe geöffnet bzw. verschlossen werden, wodurch der Austausch der Fluide innerhalb der vorliegenden Erfindung gewährleistet ist.

An der Venturidüse 23 ist eine Unterdruckleitung 33 angeschlossenen, die den Gasraum 34 über der Flüssigkeitsoberfläche im Reaktor 14 evakuiert.

Im Reaktor 14, in dem die Ozonbehandlung stattfindet, ist in der kleinen Steigleitung 31 eine kleine Pumpe 32 installiert, die die in dem Reaktor befindlichen Fluide 12 in den oberen Bereich des Reaktors 14 befördert bzw. umpumpt. In der Steigleitung 31 ist eine weitere Unterdruckversorgung in Form einer Venturidüse 30 angeordnet, die Ozon 27 aus einem oder mehreren Ozonisatoren 28 über die Ozonleitung 29 in den Reaktor 14 ansaugt und mit den Fluiden 12 in Kontakt bringt. Durch die Unterdruckleitung 33 wird der Gasraum 34 evakuiert und überschüssige Gase, vornehmlich Ozon/Luft-Gemische, dem Reservoir 16 zugeführt.

Der Ozongehalt und die Verweildauer der Fluide 12 in dem Reaktor 14 werden einerseits mittels mindestens einer Elektrode 36 in dem Reaktor 14 an der Meß- und Regeleinrichtung 37 gesteuert, zum anderen befindet sich ein Druckmeßgerät 35 in der Unterdruckleitung 33, welches ebenfalls mit der Meß- und Regeleinrichtung 37 verbunden ist.

Über einen Dreiwegehahn 38 in der Steigleitung 20 können die gereinigten Fluide über eine Zubringerleitung 39 einer Filteranlage 40 und/oder einer nitrifizierenden Anordnung 41 zugeführt werden.

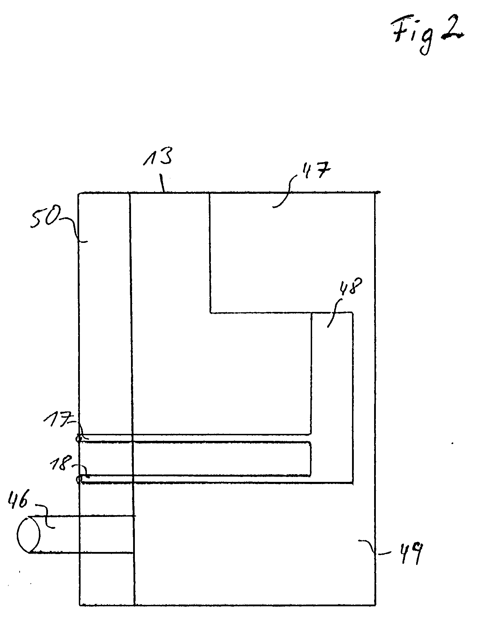

In der in Figur 2 gezeigten Absaugkammer 11 strömt über einen Ansaugstutzen 46 das Fluid 12, z.B. ein Gasgemisch, das aus einer Absaugkammer 11 herangeführt wird, in den mit einem Wärmetauscherverschluß 50 isolierten Wärmetauscher 13. Innerhalb des Wärmetauschers 13 gelangt das erwärmte Fluid 12 durch eine Kühlschleuse 47 in den Kondensator 48, von wo aus es als Kondensat über die Kondensatleitung 18 und als nicht kondensiertes Restgasgemisch 12 über die Restgasleitung 17 getrennt abgeführt werden.

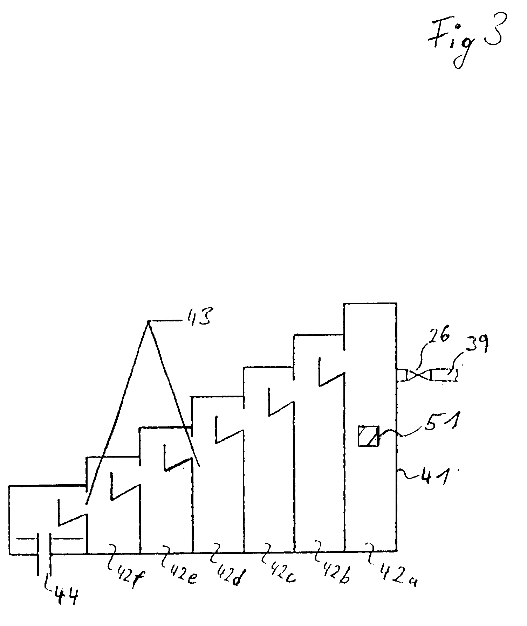

Bei der in Figur 3 dargestellten Ausführung der nitrifizierenden Anordnung 41 fließt über die Zubringerleitung 39 gereinigtes Fluid in den Behälter 42a, von wo es über ein Überlauf 43 in den nächsten Behälter 42b gelangt, von dem es über weitere Überläufe 43 in die nachfolgenden Füllkörper 42c, 42d,42e und 42f fließt. Über den Ablauf 44 verläßt das Fluid die nitrifizierende Anordnung 41. Innerhalb der nitrifizierenden Anordnung 41 sind Meßeinrichtungen 51 vorgesehen, mit denen der Nitratgehalt und die Populationsdichte der Bakterien meßbar sind.

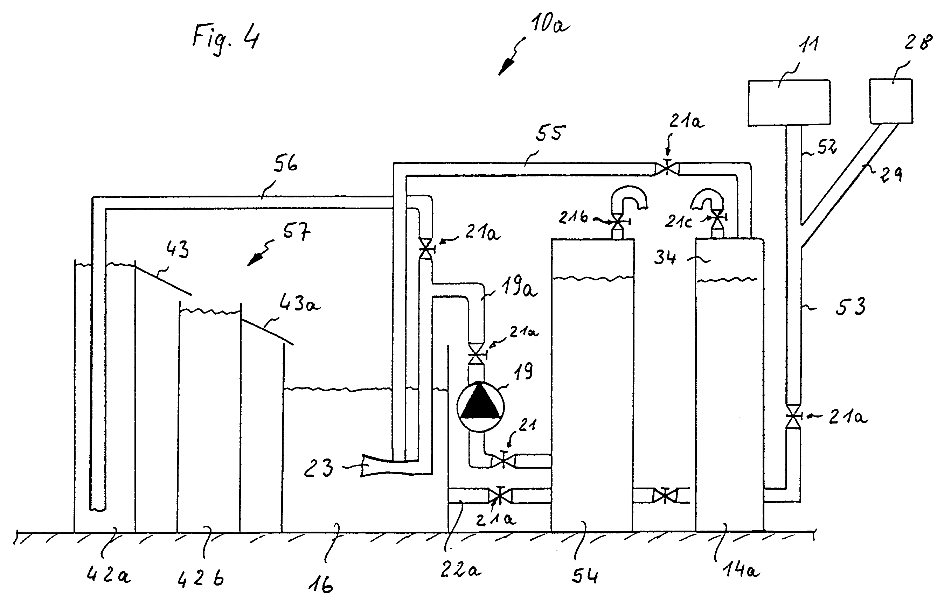

Die in der Figur 4 dargestellte Luft-Reinigungsanlage 10a zur Beseitigung von Verunreinigungen aus gasförmigen Fluiden besteht im wesentlichen aus einer Ansaugkammer 11 für die gasförmigen Fluide, die beispielsweise aus einer beliebigen Verbrennungsreaktion resultieren oder als Abluft aus Viehställen vorliegen.

Diese Abluft, die meist mit einem starken Geruch belastet ist, wird durch Unterdruck abgesaugt und über Leitungen 52 und 53 in einen mit einem wäßrigem Medium gefüllten Reaktor 14a geführt. Gleichzeitig mit der Abluft wird Ozon aus einem Ozonisator 28 angesaugt. Das Ozon wird über eine Ozonleitung 29 und die Abluft wird über eine Abluftleitung 52 einer gemeinsamen Zuführleitung 53 zugeführt. In dieser gemeinsamen Zuführleitung 53 beginnt die eigentliche Ozonisierung der Abluft, die in dem nachgeordneten Reaktor 14a fortgesetzt wird.

Der für den Transport der gasförmigen Fluide notwendige Unterdruck resultiert aus einer an einer Druckleitung 19a in einem Reservoir 16 angeordneten Venturidüse 23. An der Venturidüse 23 ist eine Gasleitung 55 angeschlossenen, die in einem Gasraum 34 über der Flüssigkeitsoberfläche im Reaktor 14a mündet, diesen kontinuierlich evakuiert und somit einen permanenten Unterdruck erzeugt.

Mittels einer in der Druckleitung 19a angeordneten Pumpe 19 mit regelbarer Pumpenleistung wird aus dem Reservoir 16, aus dem Reaktor 14a oder aus dem Pumpenzylinder 54 Flüssigkeit in das Reservoir 16 durch die Leitungen 19a oder 22a gepumpt. Ferner ist dem Reservoir 16 eine Verrieselungsanlage 57 nachgeordnet, in die über Leitung 19a und 56 Fluid gepumpt werden kann. Durch Ventile 21a können die Leitungen 19a, 22a oder 56 entsprechend ihrer jeweiligen Aufgabe geöffnet bzw. verschlossen werden, wodurch der Austausch der Fluide innerhalb der gesamten Luft-Reinigungsanlage 10a gewährleistet ist. Zur Entlüftung sind an dem Reaktor 16 und dem Pumpenzylinder 54 Belüftungsventile 21b und 21c angeordnet, über die im Bedarfs- oder Notfall die Behälter entspannt werden können.

Über ein als Dreiwegehahn ausgebildetes Ventil 21a in der Zuleitung 56 kann das wäßrige Fluid, in welchem die Ozonbehandlung der verunreinigten Gase stattgefunden hat, über die Leitungen 22a und 19a aus dem Reaktor 114a bzw. dem Pumpenzylinder 54 der Verrieselungsanlage 57 zugeführt werden.

Bei der dargestellten Ausführung der Verrieselungsanlage 57 fließt gereinigtes unbehandeltes und daher mit Ozon stark angereichertes Fluid über die Zuleitung 56 in den Behälter 42a. Von dem Behälter 42a aus, von dem es über ein Überlauf 43 in den nächsten Behälter 42b gelangt, fließt das flüssige Fluid über einen weiteren Überlauf 43a in das Reservoir 16 zurück. Die kaskadenförmige Verrieselungsanlage 57 kann dazu durch weitere nicht dargestellte Behälter erweitert werden.

### Bezugszeichen

- 10, 10a: Reinigungsanlage
- 11: Absaugkammer
- 12: Fluide
- 13: Wärmetauscher
- 14, 14a: Reaktor
- 15: Pumpengehäuse
- 16: Reservoir
- 17: Restgasleitung
- 18: Kondensatleitung
- 19: Pumpe
- 19a: Druckleitung
- 20: Steigleitung
- 21: Hauptleitung
- 21a: Ventile
- 21b,21c: Belüftungsventil
- 22: Hauptventil
- 22a: Verbindungsleitung
- 23: erste Venturidüse
- 24: Absaugleitung
- 25: Absaugleitung
- 26: Nebenventile
- 27: Ozon
- 28: Ozonisator
- 29: Ozonleitung
- 30: zweite Venturidüse
- 31: Steigleitung
- 32: Pumpe
- 33: Unterdruckleitung
- 34: Gasraum
- 35: Druckmeßgerät
- 36: Meßelektrode
- 37: Meß/Regeleinricht.
- 38: Dreiwegehahn
- 39: Zubringerleitung
- 40: Filteranlage
- 41: Anordnung
- 42a-f: Behälter
- 43: Überlauf
- 44: Ablauf
- 45: Auffangbecken
- 46: Ansaugstutzen
- 47: Kühlschleuse
- 48: Kondensator
- 49: Kühlmaschine
- 50: Verschluß
- 51: Meßeinrichtungen
- 52: Ansaugleitung
- 53: Zuführleitung
- 54: Pumpenzylinder
- 55: Gasleitung
- 56: Zuleitung
- 57: Verrieselungsanl.

## Patentansprüche

1. Vorrichtung zur gemeinsamen Beseitigung von Verunreinigungen aus sowohl flüssigen als auch gasförmigen Fluiden durch Behandlung mit Ozon in einem Reaktor, enthaltend
- eine Absaugkammer (11) für das gasförmige Fluid, der ein Wärmetauscher (13) und diesem der Reaktor (14) nachgeordnet sind, wobei der Wärmetauscher (13) einen Kondensator (48) zur Überführung des gasförmigen Fluids in verschiedene Aggregatzustände und für jeden Aggregatzustand eine getrennte Zuleitung (17, 18) zum Reaktor (14) enthält,
- ein Reservoir (16) für das flüssige Fluid, dem eine Pumpe (19) in einer Steigleitung (20), welche mit einer Unterdruckversorgung (23) im Reservoir (16) und über eine Hauptleitung (21) mit dem unteren Bereich des Reservoirs (16) verbunden ist, zugeordnet ist sowie getrennte Absaugleitungen (24, 25) von der Oberfläche und vom Boden des Reservoirs (16), die sowohl mit dem Reaktor (14) als auch über die Steigleitung (20) wieder mit dem Reservoir (16) verbunden sind,
- eine den Gasraum (34) über der Flüssigkeitsoberfläche im Reaktor mit der Unterdruckversorgung (23) verbindende Unterdruckleitung (33),
- eine im Reaktor angeordnete Steigleitung (31) in der eine Pumpe (32) und eine Unterdruckversorgung (30), die über eine Ozonleitung (29) mit dem Ozonisator (28) verbunden ist, installiert sind,
- und eine die Ozonmenge steuernde Meß- und Regeleinrichtung (37).

2. Vorrichtung nach Anspruch 1, dadurch gekennzeichnet, daß die Unterdruckversorgungen (23, 30) Venturidüsen sind.

3. Vorrichtung nach den Ansprüchen 1 und 2, dadurch gekennzeichnet, daß dem Reaktor (14a) eine die Luftfeuchtigkeit und den Sauerstoffgehalt des gereinigten Fluids erhöhende Verrieselungsanlage (57) nachgeordnet ist.

4. Vorrichtung nach Anspruch 3, dadurch gekennzeichnet, daß die Verrieselungsanlage (57) über eine Zuleitung (56) mit mindestens einem Behälter (42a, 42b) verbunden ist.

5. Vorrichtung nach den Ansprüchen 3 und 4, dadurch gekennzeichnet, daß die Verrieselungsanlage (57) aus mehreren, in Reihe geschalteten, miteinander verbundenen Behältern (42a, 42b) besteht, die Behälter (42a, 42b) kaskadenförmig angeordnet sind, das Fluid aus einem Reservoir (16) dem ersten Behälter (42a) zugeleitet und nach Durchlaufen der Behälterkaskade (42a, 42b) in das Reservoir (16) zurückgeführt ist.

6. Vorrichtung nach den Ansprüchen 3 bis 5, dadurch gekennzeichnet, daß die Behälter (42a, 42b) mit Grünpflanzen bepflanzt sind.

7. Verfahren zur gemeinsamen Beseitigung von Verunreinigungen aus sowohl flüssigen als auch gasförmigen Fluiden durch Behandlung mit Ozon mittels einer Vorrichtung nach Anspruch 1, bei dem das zu reinigende Gas aus der Ansaugkammer zuerst im Wärmetauscher kondensiert wird und die dabei erhaltene flüssige (Kondensat) und gasförmige Phase (Restgas) getrennt in den Reaktor überführt werden, und die zu reinigende Flüssigkeit aus dem Reservoir in den Reaktor geleitet wird, wobei der für den Transport der Fluide erforderliche Unterdruck über die im Reservoir angeordnete Unterdruckversorgung erzeugt wird, und bei dem Ozon durch einen an der Unterdruckversorgung im Reaktor erzeugten Unterdruck aus dem Ozonisator in den Reaktor angesaugt wird, wobei die zur Ozonbehandlung erforderliche Ozonmenge in Abhängigkeit eines vorher festzulegenden, aus reaktionsspezifischen Parametern resultierenden Sollwertes, über eine Meß- und Regeleinrichtung gesteuert wird.

8. Verfahren nach Anspruch 7, dadurch gekennzeichnet, daß das gereinigte Fluid eine nachgeordnete, kaskadenförmige Behälterreihe durchläuft.

## Claims

1. Apparatus for the common removal of impurities from both liquid and gaseous fluids by treatment with ozone in a reactor, containing
- a suction chamber (11) for the gaseous fluid, downstream of which is arranged a heat exchanger (13), downstream of which the reactor (14) is arranged, the heat exchanger (13) containing a condenser (48) for converting the gaseous fluid into various states of aggregation and a separate feed pipe (17, 18) to the reactor (14) for each state of aggregation,
- a reservoir (16) for the liquid fluid, with which a pump (19) in an ascending pipe (20), which is connected to a partial vacuum supply (23) in the reservoir (16) and, via a main pipe (21), to the lower region of the reservoir (16), is associated, and separate suction pipes (24, 25) from the surface and the base of the reservoir (16) which are connected to both thereactor (14) and, via the ascending pipe (20), again to the reservoir (16),
- a partial vacuum pipe (33) connecting the gas chamber (34) above the liquid surface in the reactor to the partial vacuum supply (23),
- an ascending pipe (31) which is arranged in the reactor and in which a pump (32) and a partial vacuum supply (30), which is connected via an ozone pipe (29) to the ozoniser (28), are installed,
- and a measuring and regulating device (37) controlling the amount of ozone.

2. Apparatus according to claim 1, characterised in that the partial vacuum supplies (23, 30) are venturi nozzles.

3. Apparatus according to claims 1 and 2, characterised in that an irrigation installation (57) increasing the air humidity and the oxygen content of the purified fluid is arranged downstream of the reactor (14a).

4. Apparatus according to claim 3, characterised in that the irrigation installation (57) is connected via a feed pipe (56) to at least one container (42a, 42b).

5. Apparatus according to claims 3 and 4, characterised in that the irrigation installation (57) comprises several series-arranged interconnected containers (42a, 42b), the containers (42a, 42b) are arranged in the form of a cascade, the fluid is conveyed from a reservoir (16) to the first container (42a) and, after passing through the container cascade (42a, 42b), is returned to the reservoir (16).

6. Apparatus according to claims 3 to 5, characterised in that the containers (42a, 42b) are planted with green plants.

7. Process for the common removal of impurities from both liquid and gaseous fluids by treatment with ozone by means of an apparatus according to claim 1, wherein the gas to be purified, from the suction chamber, is first condensed in the heat exchanger and the liquid phase (condensate) and gaseous phase (residual gas) so obtained are transferred separately into the reactor, and the liquid to be purified is conveyed from the reservoir into the reactor, the partial vacuum required for transporting the fluids being generated by means of the partial vacuum supply arranged in the reservoir, and wherein ozone is sucked from the ozoniser and into the reactor by means of a partial vacuum generated at the partial vacuum supply in the reactor, the amount of ozone required for the ozone treatment being controlled by means of a measuring and regulating device in accordance with a nominal value that is to be fixed beforehand and that results from reaction-specific parameters.

8. Process according to claim 7, characterised in that the purified fluid runs through a downstream, cascade-form series of containers.

## Revendications

1. Dispositif pour éliminer conjointement des impuretés à partir de fluides tant liquides qu'également gazeux, par traitement à l'ozone dans un réacteur, contenant :
- une chambre d'évacuation par aspiration (11) pour le fluide se présentant sous forme gazeuse, en aval de laquelle sont mis en circuit un échangeur de chaleur (13) et, en aval de celui-ci, le reacteur (14), l'échangeur de chaleur (13) contenant un condenseur (48) destiné à transférer le fluide gazeux en différents états d'agrégat et, pour chaque état d'agrégat, une conduite d'amenée (17, 18) séparée allant au réacteur (14),
- un réservoir (16) destiné au fluide liquide, auquel est associée une pompe (19) montée dans une conduite montante (20), reliée à une source de vide (23), dans le réservoir (16) et reliée, par une conduite principale (21), à la zone inférieure du réservoir (16), ainsi que des conduites d'évacuation par aspiration (24, 25) séparées, partant de la surface et du fond du réservoir (16), qui sont reliées tant au réacteur (14) qu'également, par l'intermédiaire de la conduite montante (20), de nouveau au réservoir (16),
- une conduite à vide (33) reliant l'enceinte à gaz (34), située au-dessus de la surface de liquide se trouvant dans le réacteur, à la source de vide (23),
- une conduite montante (31), disposée dans le réacteur, dans laquelle sont installées une pompe (32) et une source de vide (30), reliée à l'ozoniseur (28) par l'intermédiaire d'une conduite à ozone (29),
- et un dispositif de mesure et de régulation (37) régulant la quantité d'ozone.

2. Dispositif selon la revendication 1, caractérisé en ce que les sources de vide (23, 30) sont des buses venturi.

3. Dispositif selon les revendications 1 et 2, caractérisé en ce qu'en aval du réacteur (14a) est mise en circuit une installation d'épandage (57) augmentant l'humidité de l'air et la teneur en oxygène du fluide épuré.

4. Dispositif selon la revendication 3, caractérisé en ce eue l'installation d'épandage (57) est reliée à au moins un réservoir (42a, 42b), par l'intermédiaire d'une conduite d'amenée (56).

5. Dispositif selon les revendications 3 et 4, caractérisé en ce que l'installation d'épandage (57) est constituée de plusieurs récipients (42a, 42b) reliés ensemble, branchés en série, les récipients (42a, 42b) étant disposés en forme de cascade, le fluide issu du réservoir (16) étant amené au premier récipient (42a) et, après être passé par la cascade de récipients (42a, 42b), est retourné au réservoir (16).

6. Dispositif selon les revendications 3 à 5, caractérisé en ce que les récipients (42a, 42b) sont garnis d'une plantation de plantes vertes.

7. Procédé pour l'élimination conjointe des impuretés issues de fluides tant liquides qu'également gazeux, par traitement à l'ozone au moyen d'un dispositif selon la revendication 1, dans lequel le gaz à épurer, issu de la chambre d'évacuation par aspiration, est d'abord condensé dans l'échangeur de chaleur et la phase liquide (condensat) et la phase gazeuse (gaz résiduel) alors obtenues sont transférées séparément dans le réacteur et le liquide à épurer issu du réservoir est dirigé dans le réacteur, le vide nécessaire pour effectuer le transport des fluides étant généré par l'intermédiaire de la source de vide disposée dans le réservoir, et pour lequel de l'ozone est aspirée depuis l'ozoniseur prévu dans le réacteur, au moyen d'un vide généré dans le réacteur, au niveau de la source de vide, la quantité d'ozone nécessaire pour le traitement à l'ozone étant régulée en fonction d'une valeur de consigne devant être fixée au préalable, résultant de paramètres spécifiques à la réaction, ceci par l'intermédiaire d'un dispositif de mesure et de régulation.

8. Procédé selon la revendication 7, caractérisé en ce que le fluide épuré passe par une série de récipients disposés en aval, en forme de cascade.
